# EUROPEAN PATENT SPECIFICATION

(11) **EP 0 843 203 B1**
(45) Date of publication and mention of the grant of the patent: **26.05.2004**
(21) Application number: 97309025.1
(22) Date of filing: 10.11.1997
(51) Int. Cl.: G03B 21/60, C08J 3/00, C08L 101/00, C08J 5/18

(54) **Optical diffusers obtained by melt mixing of incompatible materials**
Optische Diffusoren, erhalten durch Schmelzmischung von unverträglichem Material
Diffuseurs optiques obtenus par mélange à l'état fondu de matériels incompatibles

(30) Priority: 14.11.1996 US 31096 P
(43) Date of publication of application: 20.05.1998
(73) Proprietor: NASHUA CORPORATION, Nashua, NH 03061-2002 (US); NASHUA PHOTO LIMITED, Newton Abbot, Devon TG12 4PB (GB)
(72) Inventor: Zeira, Eitan C., Nashua, New Hampshire 03063 (US); Clabburn, Robin, Sevenhampton, Wiltshire SN6 7QA (GB)
(74) Representative: Howden, Christopher Andrew

(56) References cited:
- EP-A- 0 265 956
- WO-A-95/12631
- US-A- 4 983 016
- DATABASE WPI Section Ch, Week 9323 Derwent Publications Ltd., London, GB; Class A32, AN 93-185565 XP002057957 & JP 05 113 606 A (SUMITOMO CHEM CO LTD) , 7 May 1993

## Description

THIS INVENTION relates to optical diffusers which may advantageously be used for front or rear projection screens in general, and in particular to optical diffusers comprising incompatible materials which are mixed in the fluid phase to subsequently form a light diffusive material in sheet form upon conversion to the solid phase.

Projection screens work by scattering the light from a real image projected onto the screen. Each point on the screen in such an arrangement acts as a point source of light.

The range of viewing angles from which an image projected onto an actual projection screen appears acceptably bright is indicated by a measure termed "angle of view" (AOV). In general, the angle of view measured in a horizontal plane need not be the same as the angle of view measured in a vertical plane. A screen in which the angle of view measured in a horizontal plane is different from the angle of view measured in a vertical plane is referred to as having asymmetric diffusion characteristics or, for brevity, as being asymmetric or as having asymmetry. An idealised (Lambertian) screen scatters light falling on it equally in all directions and thus an image projected onto such a Lambertian screen would appear equally bright from all vantage points in front of the screen. A Lambertian screen would thus have an angle of view of 90°. In principle, the brightness of an image on a projection screen from any particular viewpoint can be increased by having the screen direct light preferentially towards that viewpoint rather than scattering light equally in all directions. Thus, a screen with a smaller angle of view will appear brighter (all other things being equal), from viewpoints within its angle of view than a screen having a larger angle of view.

The ratio of the brightness, from a particular viewpoint (usually along a normal to the screen), of a particular image projected onto an actual screen, to the corresponding brightness if the screen were replaced by a Lambertian screen, is referred to as the screen gain. Thus, whilst a Lambertian screen would have an angle of view of 90°, it would appear less bright than a projection screen with a more limited angle of view, from viewpoints within that angle of view, since the Lambertian screen has, by definition, a screen gain of 1 (again signifying that the light from the Lambertian screen is scattered equally in all directions). In typical viewing situations it is not necessary to project the image to the ceiling nor to the floor since it is unlikely that a viewer will be in those positions. Therefore, if one could take all the light that would otherwise be wasted in non-viewing regions and redirect it to the viewing region, i.e. in front of the screen at eye level, this would make the screen apparently brighter since the extra light would be directed to the viewing region at the expense of the non-viewing region.

A projection screen with such optical properties would, of course, be asymmetric as defined above.

For applications such as front and rear television projection systems and brightness enhancing films for computer screens the importance of obtaining a high gain over a wide range of horizontal angles but over a narrower vertical angle of view (or, in other words, redirecting the light from the vertical to the horizontal) has been increasingly recognised. In practical terms, this means that the projected image obtained is as bright as possible, for viewing positions in front of the screen which are likely to be adopted. Various solutions to this problem have been presented in the art, such as lenticular lens arrays, embossed screens, etc.

JP-A-5113606 discloses an anisotropic light scattering film made by mixing spherical polystyrene particles in a molten polyethylene matrix and extruding the resulting composition to form a film which is drawn whilst being cooled to provide an anisotropic light scattering film in which the polystyrene particles had an ellipsoidal form.

WO -A 9512631 discloses the production of pellets each comprising a barrier resin and a compatibilizer, these pellets being intended to be blended with a plastics incompatible with the barrier resin to form a molten heterogeneous blend to be formed into a product which is stretched during cooling to form a laminated product comprising alternate layers of the barrier resin and the plastics incompatible with the barrier resin, with the compatibilizer providing a bond between the barrier resin and the other, incompatible, plastics. The incorporation of the barrier resin and the compatibilizer in the correct proportions in each individual pellet avoids segregation of the barrier resin from the compatibilizer during transport and storage of the barrier resin/compatibilizer combination, and avoids regions in the finished article suffering from a lack of compatibilizer between the barrier resin layers and the other resin layers with consequent risk of delamination. The barrier resin/compatibilizer pellets may be made by coextruding the barrier resin and compatibilizer to form a strand in which, for example, the barrier resin forms the core and the compatibilizer forms an outer sheath, allowing the strand to cool and then chopping the strand up to form the pellets.

A recent product from Rohm and Haas called Plex-L, made in accordance with U.S. Patents Nos. 5237004 and 5307205 attempted to address some of the challenges for projection screens. This product comprises crosslinked acrylic spherical particles dispersed in an acrylic matrix. The refractive index differential, Δn, between the spherical particles and the matrix produces the light redirecting action by refraction. AOV is controlled by the concentration of the spherical particles in the matrix, the Δn (i.e. refractive index difference) between the particles and the matrix, the particle size and the overall thickness of the film as Matsuzaki *et al* teaches in U.S. Patent No. 5196960. However, this material has a number of limitations which hinders its wide use in projection screens.

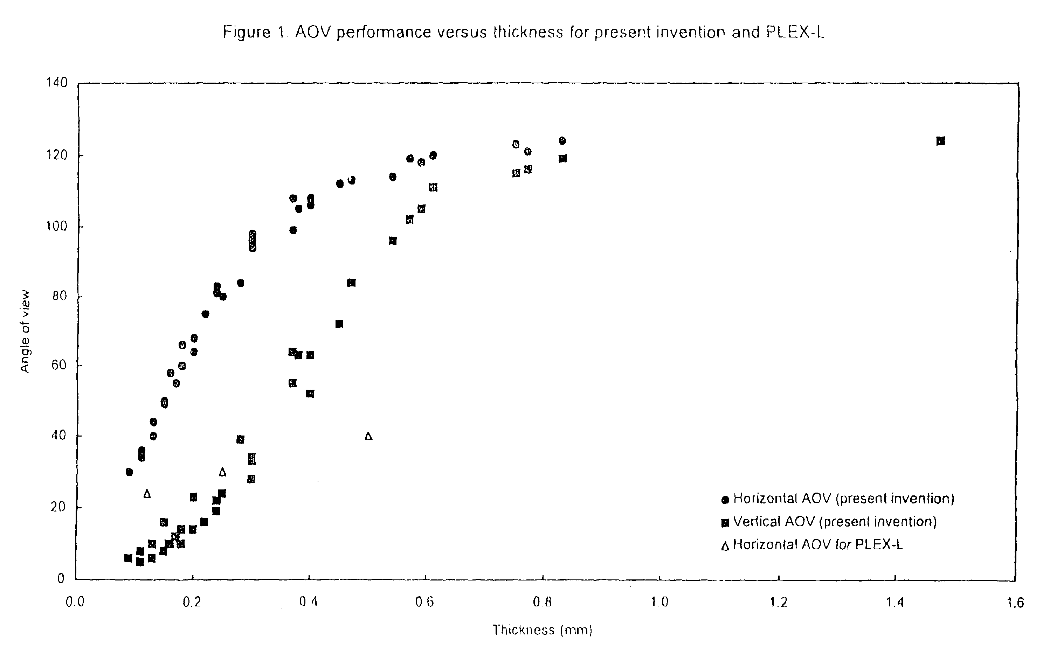

In the Plex-L material (see Figure 1), the AOV varies with the thickness of the screen. A thicker film contains more spherical particles and hence more scattering centres which lead to a higher angle of view of the resultant screen. However, the increase in screen thickness results in a loss of image definition. Also, it is desirable for a screen to have a high AOV as well as a high gain. These properties, however, are inversely related, that is high AOV screens tend to be relatively thick and have poor definition and lower gain whereas low AOV screens tend to be thinner and have better definition and higher gain. It has been proposed to use ellipsoidal particles preferentially oriented in the surround matrix to create asymmetric optical properties by reducing the vertical AOV while the horizontal AOV remains unchanged, as described in U.K. Patent No. 540,567, U.S. Patent No. 4165153 and U.S. Patent No. 4983016. In accordance with U.S. Patent No. 5473454, the Plex-L material can be stretched which causes the spherical particles to attain an ellipsoidal shape and thus preferentially deflect the light in the horizontal direction at the expense of the vertical direction (assuming the major axes of the ellipsoids to be vertical). In this patent, a thin sheet of Plex-L material is heated and stretched in one direction while the dimensions in the other (perpendicular) direction are kept constant. The choice of acrylic as the base material, however, limited the aspect ratio of the ellipsoidal particles to 2:1 which only enhances asymmetry only slightly. Furthermore, the additional and separate stretching step increases the complexity of the manufacturing process for this product and limits its versatility.

The present invention offers solutions to these shortcomings by minimising the number of process steps required to manufacture the screens, offering a wide array of materials that can be used to make the screen providing much higher aspect ratios and by achieving a high AOV at lower thicknesses and thereby increasing screen definition at a given AOV (see Figure 1).

According to the present invention there is provided a process for producing a light diffusing sheet material comprising the steps of:
(a) selecting a first material having a light transmission of at least 80% and a second material having a light transmission of at least 80% which materials are both fluid at some temperature and have different refractive indices, said materials being immiscible in their fluid states,
(b) forming a mixture by mechanically mixing said materials at a processing temperature at which they are both fluid so as to break up the first material into discrete globules of diameters in the range of 1µ to 50µ and dispersed the first material in said second material,
(c) forming a film from the mixture resulting from step (b), and
(d) causing or allowing the film or at least said second material, to solidify.

The first and second materials may be materials which are solid at room temperature and which, when heated, will become fluid at an elevated temperature such as thermoplastic polymeric materials, materials which are fluid at room temperature but are capable of subsequent setting or polymerisation to a solid form, (either thermoplastic or thermoset) and combinations of these materials. The term "optically clear material" as used herein, means material which has a light transmission of at least 80%, preferably 85%, more preferably 90%.

In one embodiment, the first and second optically clear materials have a viscosity ratio that is between 0.05 and 10 at the processing temperature and the first optically clear material is dispersed in the second optically clear material by melt mixing or compounding, for example in a simple extruder, to form a mixture in which the first material is present as a multiplicity of discrete globules. (The viscosity ratio is defined as the viscosity of the matrix material divided by the viscosity of the dispersed phase material). In this embodiment, the step of forming a film from the mixture includes hardening the film, and where appropriate, orienting the material, preferably as an integral part of the sheet forming process, to create asymmetrical optical properties. In one embodiment at least, said second material is thermoplastic and is caused to harden by cooling. In another embodiment, at least said second material is caused or allowed to harden by chemical action, for example by polymerisation, which may be induced chemically or physically (for example by exposure to UV or other ionising radiation or by heating).

The invention further relates to sheet diffusers made according to any of the processes disclosed herein.

Whilst, in embodiments of the invention, the dispersion of the first material in the second is effected by vigorous mechanical mixing, beating, compounding, or mastication, for example utilising the mechanical mixing effect afforded by the screw or screws in a conventional screw extruder, the final size or final minimum size of the globules of said first material at the end of this mechanical mixing is, the applicants have found, also a function of the relative viscosity of the two materials. Ideally the ratio of the viscosity of the second (matrix) material to the first (dispersed) material, should be in the range 0.05 to 10, (more preferably greater than 1). The applicants have also found that the minimum globule size readily obtainable is also a function of the interfacial surface energy between the two materials, (which may be modified by the use of surfactants).

In a preferred embodiment, the two optically clear materials have an interfacial surface energy between 1 x 10⁻⁴ and 1 x 10⁻² N/m at the processing temperature.

In order to render the sheet material asymmetric as regards its light-diffusing properties (e.g. so that it scatters light more widely horizontally than vertically) it is preferably oriented, e.g. by physically stretching before it has become solid or in the course of extruding the sheet or film.

As noted above, the first and second optically clear materials may be materials which are liquid at room temperature but which can solidify as a result of chemical action or of subsequent processing. For example, the materials may be monomers, prepolymers or mixtures of the components of two-part curing systems, the mixing, dispersing and subsequent casting or extrusion of the mixture to form a filin taking place before such setting or solidification has taken place. Where, in this case, the material is to be oriented, for asymmetry, this may, for example, be achieved by extruding or pouring the material, at the appropriate stage in the setting process, onto a moving belt or web travelling somewhat faster than the extrusion rate, whereby the material is oriented in such pouring or extrusion but sets before the dispersed globules, which have become elongated as a result of such extrusion or pouring, are able to revert to a spherical shape. Alternatively, the first and second materials may be thermoplastic polymers or copolymers which are solid at room temperature but which will become fluid when heated. Where the materials selected are thermoplastic the mixing step will be carried out at elevated temperature. Clearly desirable properties may be achieved from combinations of materials which are solid or liquid at room temperature. Furthermore, one material may be thermoplastic and the other thermosetting, for example, where reaction rates at respective melt temperature permit, for example.

Materials which are liquid at room temperature which may be used in the present invention include, but are not limited to, monomers and prepolymers of the general classification esters, acrylics, urethanes, siloxanes and the like, or two-component systems including epoxies, polyesters and polyurethanes. Materials which may be used which are solid at room temperature include, but are not limited to, polymers and copolymers, such as polyolefins, polyesters, polyamides or polyamide copolymers, acrylics, silicone polymers and elastomers, polystyrene, polycarbonate, cellulose acetate, cellulose acetate butyrate. In general, materials which are amorphous rather than crystalline in the solid state may provide advantageous results.

In preferred embodiments, the first and second optically clear materials may be selected from ethylene and propylene polymers and copolymers, polystyrenes and acrylics, provided, of course, that the first and second materials are immiscible.

In general, depending upon the properties desired the materials set out above may be used either as the second (matrix) material or as the first (dispersed) material, provided, of course, that the two materials selected for any particular embodiment are immiscible and have different refractive indices. It will be understood that the tendency of a specific material to become either the matrix or the dispersed phase during the mixing process depends on a number of factors including the proportions of the individual components. It will be recognized that this comment will apply to materials which are fluid at room temperature when mixed at elevated temperature with materials which are solid at room temperature. For example, siloxane resins including elastomers, fluids at room temperature can be "injected" into polyethylene or similar polymers during extrusion, or during mixing (e.g. by extruder feed screw) prior to extrusion to achieve small dispersed droplets, as described, which can then be polymerized to become effectively solid stable particles within the matrix. "Solid" in this context is intended to imply that the material has been sufficiently polymerized to immobilize it effectively within the polymer matrix. Similarly, silicone elastomers can be blended with a minor proportion of polyethylene and subsequently cured so that the polyethylene particles become the dispersed phase. In some instances the silicone elastomer can be of sufficiently low molecular weight before and during the mixing process to be regarded as fluid.

Whilst, in the embodiments referred to herein the materials use are, for the most part, thermoplastics materials solid at room temperature and thus having a melting point, or glass transition temperature T_{g} above room temperature, the use of one or more optically clear materials which have a T_{g} lower than room temperature (i.e. are liquid at room temperature) are however contemplated to be within the scope of the present disclosure. (Some materials, such as glass and, notably, thermoplastic polymeric materials do not change suddenly from a solid to a liquid phase at a specific temperature and thus have no specific melting point, but rather become progressively less viscous over a range of temperatures. For such materials, in place of "melting point" a corresponding measure, namely the glass transition temperature, T_{g}, is used. A definition of this term is not given here, but will be known to those skilled in the art. Solid/liquid combinations have been outlined previously. Liquid/liquid combinations, that is materials combinations which are liquid at room temperature, can be mixed as described at room temperature such that one disperses within the other as small droplets. The mixture can then cast as a thin filin onto a convenient substrate, typically polyester, whereafter at least the matrix material is converted to a substantially solid film by, for example, polymerisation (or condensation) using heat, UV, electron beam or other curing method. The resulting film may remain attached to the substrate or subsequently be separated from it.

Additional processing steps may be incorporated. For example, when the material which forms the light diffusing particles in the liquid phase is a solid at room temperature, it can be advantageous for this to be incorporated into the blending/dispersing process step (b) as small particles or pellets. This enables a uniform dispersion to be created quickly and can reduce the time and energy required to produce particles of the required final size. Clearly this can be advantageous when using materials which are thermally reactive or lacking in thermal stability. The filin forming step may incorporate or be followed by a process which "distorts" the generally spherical shape of the dispersed phase to be ellipsoidal or otherwise elongate and in this way create asymmetric optical properties. While the mixture is in the fluid state and relatively viscose this can be achieved by orientation, for example by force or by drawing the fluid material through a die orifice or other restraint. However, the material must be converted to a solid state, typically by cooling or polymerisation, to ensure that the asymmetry is not lost due to relaxation phenomena. Alternatively the material may be subsequently oriented as described in US Patent No. 5473454.

Embodiments of the invention are described below by way of example with reference to the accompanying drawings in which:-
FIGURE 1 is a graph illustrating variations in angle of view (AOV) with film thickness for a known screen material and for a screen material made in accordance with the present invention;
FIGURE 2 is a graph of viscosity vs. temperature curve for optically clear polypropylene ("PP"), and optically clear polystyrene ("PS");
FIGURE 3 is a graph of gain vs. viewing angle for a known screen material, and
FIGURE 4 is a graph, similar to Figure 3, but for an asymmetric film produced in accordance with the present invention (see Example 4).

This disclosure demonstrates making light diffusing films by creating a dispersion of light scattering optically clear particles in an optically clear matrix during mixing of the constituent components of the diffuser in the fluid phase and then forming a film or sheet by, e.g. extrusion or casting, from which a screen suitable for displaying images projected thereupon may be constructed. According to the invention, the respective light dispersing and matrix components are chosen by their respective viscosities, interfacial surface energies, and refractive index differential. More particularly, it has been found that when the ratio of the viscosity of a second (matrix) optically clear material to first (forming light dispersing particles), optically clear material is between 0.05 and 10, the first optically clear material can readily be dispersed or broken up into particles of a desired diameter during mixing or mastication of the two optically clear materials while in the fluid phase.

The second optically clear material forms the matrix or binder for the light diffusing screen, and, as such, is desirably durable stable, self-supporting, and allows lamination to other materials, such as reflective backings. Depending on the particular application, suitable optically clear materials are optically clear acrylics such as optically clear polymethylmethacrylates; optically clear polystyrenes; optically clear polypropylenes; optically clear "tenite" organic acid cellulose esters, e.g. cellulose acetate butyrates, cellulose acetate, and cellulose acetate propionate and optically clear polycarbonates. In a preferred embodiment, optically clear polypropylene/polyethylene copolymers may be used.

The first optically clear materials, dispersed in the second as small particulate or ellipsoidal "lenses", directs the light where desired. The shape of the lenses, their size and the Δn (refractive index difference) between the first and second optically clear materials determine the redirection of the light as well as the gain of the screen comprising the light diffusing sheet material. Examples of suitable first optically clear material are also application dependent, but may be optically clear acrylics such as optically clear polymethylmethacrylates (e.g. Zeneca XB-1223); optically clear polystyrenes; optically clear polypropylenes; optically clear "tenite" organic acid cellulose esters, e.g. cellulose acetate butyrates, cellulose acetate, and cellulose acetate propionate; and optically clear polycarbonates. In a preferred embodiment, optically clear polystyrene may be used. In many instances the matrix and dispersed phase materials are interchangeable.

Although the two optically clear materials which form the matrix and dispersed particles are discussed herein generally as homogeneous materials, each could also be heterogeneous, i.e. mixtures of optically clear materials, chosen to meet the requirements disclosed herein, i.e. immiscibility, differential viscosity, refractive index, etc. To improve processing, compatibilizers known in the art may be used, such as KRATON (Shell) block copolymers. Typically, the compatibilizer is added at less than 5% by weight based on the total weight of the mixture. These compatibilizers may be polymers or copolymers. A copolymer is herein defined as a polymer created from more than one monomer. Desirably, the compatibilizer has moieties chemically compatible with each of the components of the mixture to which it is added. For example, a matrix of ethylene ethylacrylate copolymer and a dispersed phase of polystyrene may be compatibilized by the addition of a small amount of a styrene/acrylic copolymer compatibilizer. Other compatibilizers which may be used include zinc stereate and olefin waxes.

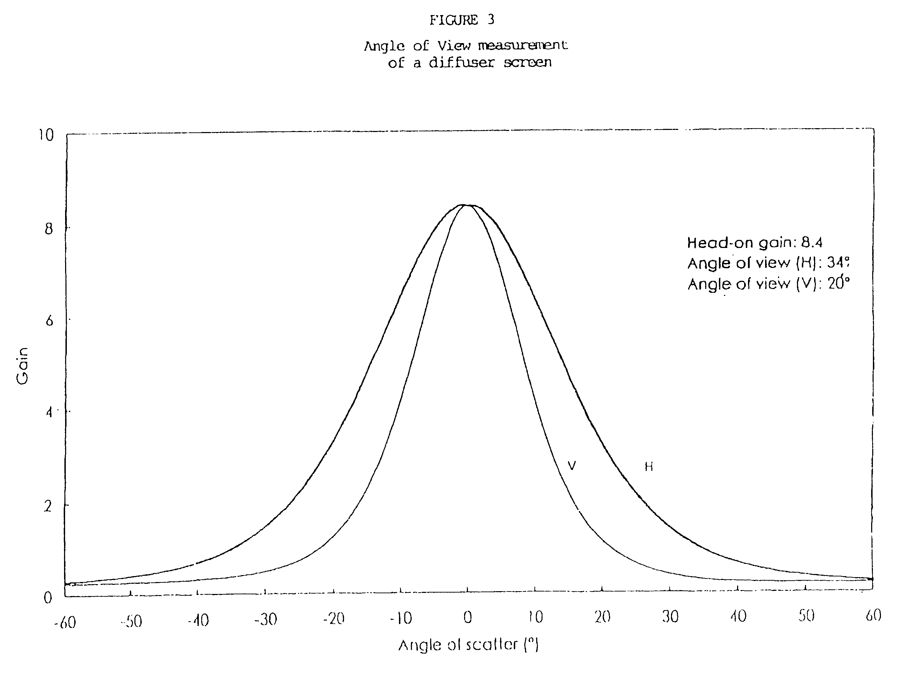

In this disclosure, reference is made to "angle of view", or "AOV" (see Figure 3). In this specification, the term "angle of view" refers to the range of viewing angles of observers relative to a diffusing screen or a rear projection screen over which the apparent brightness of the screen is within 50% or more of the apparent brightness to an observer viewing the screen at tight angles assuming that the light incident on the screen is incident along the normal to the screen. This figure is often referred to as "full width half maximum" or "fwhm". In the examples set out below, the angle of view was measured by illuminating a small area of the screen material by a laser beam (although some other collimated light beam may be used) directed normally to the plane of the screen and measuring the light reflected (or for rear projection screens transmitted) from that small area over a range of angles. Furthermore, in the following, the expression "angle of view for transmission" means "angle of view" defined as above for a screen of light-diffusing material illuminated by a projector or the like disposed on the opposite side of the plane of the screen from the observer, i.e. for a rear-projection screen whilst the expression "angle of view for reflection" means "angle of view" defined as above for a screen of light reflective material illuminated by a projector or the like disposed on the same side of the plane of the screen as the observer, i.e. for a front projection screen.

The particle size and concentration of the dispersed phase in the matrix, as well as the Δn of the two optically clear materials will determine the light diffusive properties of the screen. Within thickness limitations, the AOV is found to be directly proportional to the concentration and Δn and inversely proportional to the particle size at the dispersed phase as shown in U.S. Patent No. 5196960. It has been found that Δn values of 0.2 - 0.005 preferably 0.1 - 0.007 provide the desired optical properties. The particle size for the dispersed phase ranges from about I to 50µ, preferably 2 to 30µ, and more preferably 2 to µ. However, for more highly asymmetric materials, oriented particles of larger volume, but having a minor dimension in the range 2 - 10µm, are preferred.

The material is desirably processed *via* vigorous mixing or mastication of the optically clear material components, at a temperature higher than the T_{g} of the first material. Any apparatus capable of providing the proper mixing may be used, for example, Banbury mixer, single screw or twin screw extruder, Hobart mixer etc. For example, one embodiment of the invention employs a twin screw extruder to disperse the second optically clear material in the first and produce masterbatch pellets, which may then be loaded into a melting and conveying device (single screw extruder outfitted with a die) to produce a light diffusing sheet material. In this scenario since the raw materials and the masterbatch are solids, they may be simply loaded into the extruder hopper, simplifying manufacture of the material. In another embodiment of the invention, a single screw extruder with a cavity transfer mixer is utilised to both mix and extrude the resins in one single process.

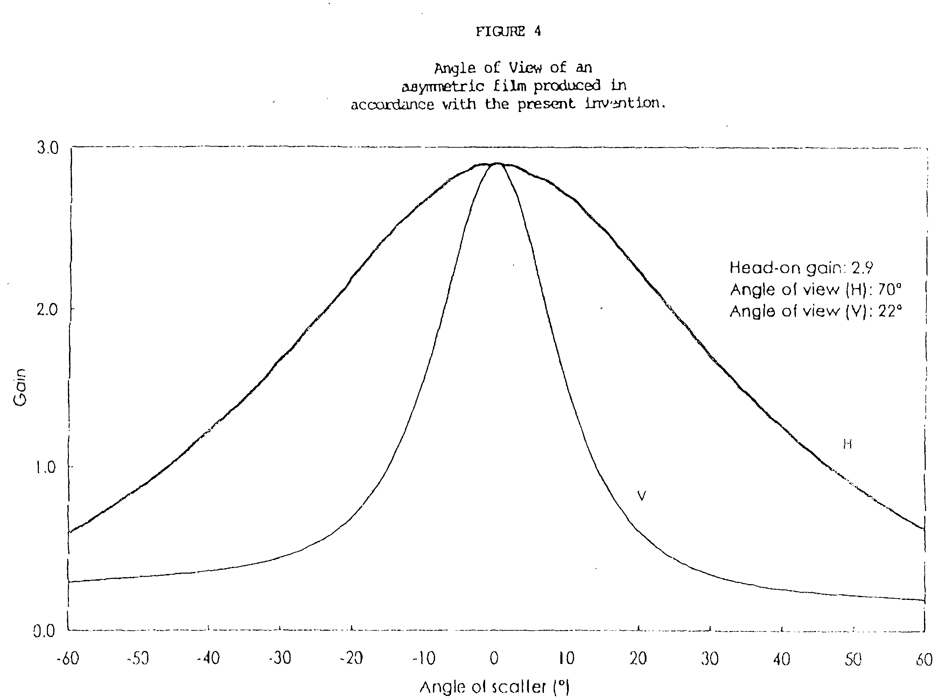

In a preferred embodiment of the invention, the first and second optically clear materials are processed using a single screw extruder outfitted with a cavity transfer mixer and a slot die to disperse the second optically clear material in the first, and extrude the melt into a sheet form all in a single step. More preferably, the sheet emerging from the sheet die is processed onto a take up roll operating at a faster rate than the speed at which the sheet emerges from the sheet die, thereby stretching the sheet in the machine direction and imparting asymmetry to the particles of the first optically clear material dispersed in the matrix (second optically clear material) to result in a high horizontal AOV light diffuser with a high gain and a lower vertical AOV (see Figure 4).

An alternative to sheet extrusion and orientation to create an asymmetric material is to extrude the material as a tube and expand the tube to a large diameter by differential pressure which, in conjunction with haul-off ratio, enables an optimum of radial and longitudinal orientation to be achieved. Subsequently the tube is slot to form a sheet of material with asymmetric optical properties but, by comparison with the more conventional sheet process, no edge effects exist.

Figure 1 demonstrates the advantages of light diffusing materials according to the present disclosure (data points are obtained from measurements of material as shown in Table 2, below), in comparison to the PLEX-L material. It can be seen that the optical performance of the present materials is superior to the PLEX-L material, although the latter contains 40% dispersed particles, compared to the materials of Examples 4 and 5 (containing 20% or 30% dispersed particles).

The viscosity energy relationship between the two material components of the diffuser disclosed herein will be better understood by referring now to the drawings.

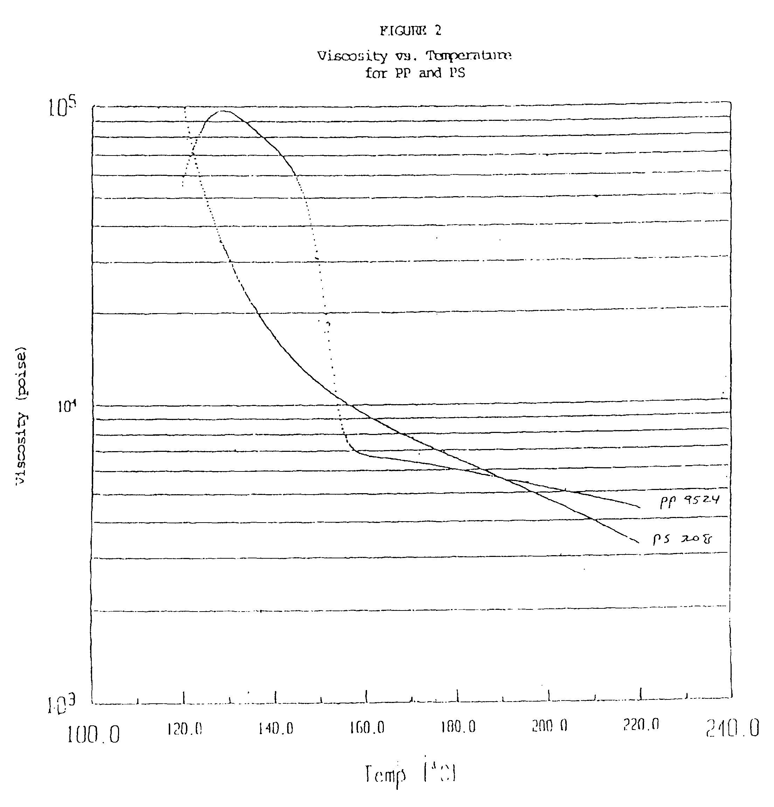

Figure 2 illustrates a favourable embodiment in which optically clear polypropylene (PP9524 (Exxon Chemical)) is used as the host or matrix material and optically clear polystyrene (Huntsman 208) is used as the dispersed phase. At 180°C, both materials have viscosities suitable for extrusion by an ordinary single screw extruder through a die to form a sheet or tube. Figure 2 shows PP9524 (polypropylene - abbreviated herein as "PP") having a higher viscosity than polystyrene (abbreviated herein as "PS"), below 150°C, and a lower viscosity above 160°C. Within the zone where the viscosities of the two materials are similar, acceptable size PS spherical particles can be generated and a diffuser can be produced by dispersing the PS in the PP by melt mixing. At 180°C, according to Figure 2, the viscosity ratio of the two materials is 0.8. When mixed at that temperature, for example by the feed screw of the extruder, the minor component (the polystyrene) will break up into spherical particles averaging several microns in size. The size of the spherical particles will vary depending on the concentration of the dispersed phase as well as the viscosity ratio, and to some extent the process conditions. The higher the concentration and the lower the viscosity ratio, the higher the size of the dispersed phase particles. It will be understood from Figure 2 that the viscosity ratio can be changed by varying the temperature.

The ratio of viscosity of matrix to viscosity of dispersed phase is the measured value of interest. A viscosity ratio of about 0.3 produces roughly 1 - 2 micron spherical particles (globules), as the minimum readily obtainable by mechanical mixing, when the concentration is 10% dispersed phase and 3 - 4 micron spherical particles, as the corresponding minimum, for a 20% dispersed phase. Reducing the viscosity ratio to 0.1 roughly doubles the minimum readily obtainable size of the spherical particles (globules) while increasing the viscosity ratio to 2.0 allows submicron (i.e. less than 1 x 10⁻⁶ m diameter) spherical particles for similar concentrations.

### EXAMPLE 1

Light diffusing sheet material in accordance with this disclosure was made as follows. Escorene PP9524 polypropylene (Exxon Chemical) in pellet form ("PP") and crystal polystyrene 208 (Huntsman Chemical Corporation), also in pellet form ("PS"), were added in volumetric proportions of 80% PP and 20% PS to a Leistritz corotating twin screw extruder operating at a barrel temperature of 180°C. Screw speed was set at 50 RPM and feed rate was set at 40RPM. A pelletizer fitted with a water bath was used to convert the extrudate to pellets.

The pellets were thereafter fed into a Haake Rheocord 9000 outfitted with a single screw extruder and 4 inch die. The extruder was run at various RPM to extrude a film onto a take-up roll that was run at various take-up roll speeds. The die opening was 0.9 mm. The resulting films were measured for vertical angle of view AOV (V), horizontal angle of view AOV (H), gain, average particle size and the average aspect ratio of the particles. Table 1 summarises the results obtained for a number of parameters variations to demonstrate the beneficial light dispersing properties of materials made using the methods disclosed herein.

**TABLE 1**

| **System** | **Screw Speed, RPM** | **Take-up Roll RPM** | **Film Thickness, cm** | **Average Particle Size µm** | **Aspect Ratio** | **AOV Horiz.** | **AOV Vert.** | **Gain** |
|---|---|---|---|---|---|---|---|---|
| PP/PS | 25 | 7 | 0.00540 | - | 50 | 68 | 28 | 2.8 |
| | 25 | 28 | 0.00057 | 1.211 | 2.943 | 14.5 | 6 | 32.7 |
| | 50 | 7 | 0.02650 | 2.920 | 2.143 | 58.5 | 29 | 2.9 |
| | 50 | 28 | 0.00326 | 0.733 | 1.778 | 68 | 28 | 2.8 |
| | 100 | 7 | 0.03730 | 1.074 | 1.939 | 95 | 75 | 0.8 |
| | 100 | 28 | 0.01370 | - | 100 | 74.5 | 14 | 3.3 |

### EXAMPLE 2

Light diffusing sheet material in accordance with this disclosure was made as follows. Exact Polyethylene 3024 (Exxon Chemical) in pellet form ("PE") and crystal polystyrene 208 (Huntsman Chemical Corporation), also in pellet form ("PS"), were added in volumetric proportions of 80% PP and 20% PS to a Leistritz corotating twin screw extruder operating at a barrel temperature of 180°C. Screw speed was set at 50 RPM and feed rate was set at 40RPM. A pelletizer fitted with a water bath was used to convert the extrudate to pellets.

The pellets were thereafter fed into a Haake Rheocord 9000 outfitted with a single screw extruder with a 4 inch wide die. The extruder was run at various RPM to extrude a film onto a take-up roll that was run at various take-up roll speeds. The die opening was 0.9 mm. The resulting films were measured for vertical AOV, horizontal AOV, gain, average particle size and the average aspect ratio of the particles. Table 2 summarises the results obtained with variation of a number of parameters, to demonstrate the beneficial light dispersing properties of material made using the methods disclosed herein.

**TABLE 2**

| **System** | **Screw Speed RPM** | **Take-up Roll RPM** | **Film Thickness cm** | **Average Particle Size µm** | **Aspect Ratio** | **AOV Horiz.** | **AOV Vert.** | **Gain** |
|---|---|---|---|---|---|---|---|---|
| PE/PS | 25 | 7 | 0.02159 | 1.434 | 1.206 | 74 | 66 | 1.4 |
| | 50 | 7 | 0.03719 | 1.242 | 1.229 | 95 | 96 | 0.7 |
| | 50 | 7 | 0.03103 | 1.226 | 1.317 | 93 | 95 | 0.7 |
| | 50 | 28 | 00.01060 | 0.984 | 1.652 | 98 | 60 | 4.9 |
| | 50 | 28 | 0.00976 | 1.245 | 1.327 | 102 | 70 | 4.4 |
| | 100 | 7 | 0.04775 | 1.001 | 2.064 | 97 | 95 | 0.7 |
| | 100 | 7 | 0.03556 | 1.096 | 2.079 | 93 | 92 | 0.7 |
| | 100 | 28 | 0.01702 | 1.010 | 2.278 | 85 | 66 | 1.1 |
| | 100 | 28 | 0.01427 | 0.905 | 1.764 | 92 | 77 | 0.9 |

### EXAMPLE 3

Light diffusing sheet material in accordance with thus disclosure was made as follows. Escorene PP9524 polypropylene (Exxon Chemical) in pellet form ("PP") and Tenite Butyrate 575 (Eastman Chemical Company), also in pellet form ("TB"), were added in volumetric proportions of 90% PP and 10% TB to a Leistritz corotating twin screw extruder operating at a barrel temperature of 180°C. Screw speed was set at 50RPM and feed rate was set at 40RPM. A pelletizer fitted with a water bath was used to convert the extrudate to pellets.

The pellets were thereafter fed into a Haake Rheocord 9000 outfitted with a single screw extruder and 4 inch die. The extruder was run at various RPM to extrude a film onto a take-up roll that was run at various take-up roll speeds. The die opening was 0.9 mm. The resulting films were measured for vertical AOV, horizontal AOV, gain, average particle size and the average aspect ratio of the particles. Table 3 summarises the results obtained for a number of parameters variation to demonstrate the beneficial light dispersing properties of materials made using the methods disclosed herein.

**TABLE 3**

| **System** | **Screw Speed RPM** | **Take-up Roll RPM** | **Film Thickness cm** | **Average Particle Size µm** | **Aspect Ratio** | **AOV Horiz.** | **AOV Vert.** | **Gain** |
|---|---|---|---|---|---|---|---|---|
| PP/TB | 25 | 7 | 0.00277 | 2.159 | 1.758 | 8 | 9 | 135.0 |
| | 25 | 28 | - | 1.001 | 1.834 | 7 | 11 | 124.2 |
| | 50 | 7 | 0.02036 | 1.65 | 1.332 | 9 | 13 | 145.5 |
| | 50 | 28 | 0.00288 | - | - | 7 | 11 | 111.7 |
| | 100 | 7 | 0.02745 | 1.455 | 1.515 | 7 | 13 | 32.4 |
| | 100 | 28 | 0.01283 | 0.87 | 1.989 | 9 | 11 | 119.2 |

### EXAMPLE 4

Light diffusing materials in which polypropylene formed the matrix material with polystyrene as the disposed phase were produced as follows: Escorene polypropylene PP9524 was compounded in bulk with Crystal polystyrene 207 (Huntsman) in the ratio 70:30 in a Leistritz twin screw extruder as described in Example 1.

Pellets from this process were extruded into sheet thin a 2" single screw Francis Shaw extruder fitted with a 16" sheet die with a die gap of 1mm. The resulting sheet was oriented by varying the haul-off conditions. The haul-off equipment consisted of a 3-roll stack with independent temperature and speed controls and separately controlled nip rolls. Orientation could be carried out both above and slight below the tg of the matrix material.

The results are summarised in the following Table 4 and are illustrated in Figure 4.

**TABLE 4**

| **Film** | **Thickness** | **Draw Ratio** | **AOV (H)** | **AOV (V)** | **Gain** | **Draw Type** |
|---|---|---|---|---|---|---|
| 1 | 0.17mm | 5.9 | 70 | 22 | 2.9 | Above T_{g} |
| 2 | 0.69mm | 1.5 | 120 | 116 | 0.6 | Above T_{g} |
| 3 | 0.25mm | 4.0 | 90 | 42 | 1.6 | Above and below T_{g} |
| 4 | 0.26mm | 3.8 | 94 | 42 | 1.6 | Above T_{g} |
| 5 | 0.36mm | 2.8 | 112 | 80 | 1.0 | Above T_{g} |

### EXAMPLE 5

Raw materials as in Example 4 were fed to a 40 mm extruder fitted with a cavity transfer mixer, 8 inch slot die set at 1.5 mm utilising the same haul-off set-up described in Example 4. The cavity transfer mixer was fitted with 9 vanes. This set up enabled the separate compounding step to be eliminated. Comparison of electron micrographs of sections of material taken from Examples 4 and 5 showed a similar mean particle size (XXµm) with material from Example 5 showing a lesser variation in particle size. The polystyrene percentages were 30 (as Example 4) and 21. Optical properties of sheet materials produced through the above process are summarised in Table 5.

**TABLE 5**

| **Sample** | **Polystyrene %** | **Thickness mm** | **AOV(H)** | **AOV (V)** | **Gain** |
|---|---|---|---|---|---|
| 1 | 21 | 1.47 | 124 | 124 | 0.48 |
| 2 | 21 | 0.37 | 99 | 64 | 1 04 |
| 3 | 21 | 0.28 | 84 | 39 | 1.57 |
| 4 | 21 | 0.15 | 50 | 16 | 5.72 |
| 5 | 30 | 0.77 | 121 | 116 | 0.55 |
| 6 | 30 | 0.47 | 113 | 84 | 0.76 |
| 7 | 30 | 0.40 | 108 | 63 | 0.93 |
| 8 | 30 | 0.30 | 96 | 34 | 1.49 |
| 9 | 30 | 0.24 | 83 | 22 | 2.32 |
| 10 | 30 | 0.18 | 66 | 14 | 4.20 |
| 11 | 30 | 0.18 | 60 | 10 | 5.62 |
| 12 | 30 | 0.13 | 40 | 6 | 12.73 |

The average size of the light-diffusing particles in the finished product may be 1 to 50µm, preferably 2 to 30µm, more preferably 2 to 15µm. Still more preferably the average particle size is greater than or equal to 5µm, for example 5 to 30µm, more preferably 5 to 15µm.

The difference Δn, between the refractive index of the first material and the refractive index of the second material may be 0.2 or more, preferably 0.1 or more, although values of Δn as low as 0.005 may be useful.

The features disclosed in the foregoing description, in the following claims and/or in the accompanying drawings may, both separately and in any combination thereof, be material for realising the invention in diverse forms thereof.

## Claims

1. A process for producing a light diffusing film comprising the steps of:
(a) selecting a first material having a light transmission of at least 80% and a second material having a light transmission of at least 80% which materials are both fluid at some temperature and have different refractive indices, said materials being immiscible in their fluid states,
(b) forming a mixture by mechanically mixing said materials at a processing temperature at which they are both fluid so as to break up the first material into discrete globules of diameters in the range of 1µm to 50µm and disperse the first material in said second material,
(c) forming a film from the mixture resulting from step (b), and
(d) causing or allowing the film, or at least said second material, to solidify.

2. A process according to claim 1 wherein at least said second material is caused or allowed to harden by chemical action.

3. A process according to claim 1 wherein at least said second material is a thermoplastics which is solid at ambient temperature.

4. A process according to claim 2, wherein at least said second material is a thermosetting or polymerisable material and wherein said film-forming step comprises casting or extruding the mixture, whilst fluid or still fluid, into or onto a support and allowing or causing it to set.

5. A process according to claim 1, wherein the ratio of the vicosity of the second material to the vicosity of the first material at said processing temperature is in the range 0.05 to 10.

6. A process according to any preceding claim including orienting said film.

7. The process of claim 6 in which the angle of view of the material before the orientation process is at least 60°.

8. The process of claim I wherein said film forming step comprises extruding said mixture through a sheet die.

9. The process of claim I wherein said film is extruded using a tube die.

10. The process of claims 2 or 3 further comprising the step of stretching said film as it exits said die in order to orient the film.

11. The process of claim 1 wherein the average particle size of said light dispersing particles is from 1 to 50µm.

12. The process of claim 1 wherein the average particle size of said light dispersing particles is from about 2 to 30µm.

13. The process of claim 1 wherein the average particle size of said light dispersing particles is from about 2 to 15µm.

14. The process of claim 7 wherein said sheet is stretched in the machine direction by winding said sheet on a take-up roll operating faster than the speed at which the sheet exits from said die.

15. The process of claim 9 in which the tube formed is oriented by a combination of differential pressure and haul-off rate.

16. The process of claim 1 wherein said film forming step further comprises orienting said dispersed globules of said first material in the machine direction by extruding said mixture through a die.

17. The process of claim 1 wherein said breaking up and dispersing step is accomplished by using a twin-screw extruder in the production of masterbatch pellets from said mixture; said masterbatch pellets being subsequently processed into sheet form using a single screw extruder to melt, convey, and extrude the melt into said sheet form.

18. The process of claim 1 in which compatibilizers are incorporated in the mixture.

19. The process of claim 18 in which the compatibilizers are polymers or copolymers.

20. The process of any of claims 1 to 14 in which one of said materials comprises a polyolefin and the other of said materials comprises polystyrene.

21. The process of claim 6 in which the orientation process produces an asymmetry of at least 2:1.

## Patentansprüche

1. Verfahren zum Herstellen eines lichtstreuenden Films, welches die Schritte umfasst:
(a) Auswählen eines ersten Materials mit einer Lichtdurchlässigkeit von wenigstens 80 % und eines zweiten Materials mit einer Lichtdurchlässigkeit von wenigstens 80 %, welche Materialien beide bei einer Temperatur fluid sind und unterschiedliche Brechungsindizes aufweisen, wobei die Materialien in deren fluiden Zuständen unmischbar sind,
(b) Bilden einer Mischung durch mechanisches Mischen der Materialien bei einer Verarbeitungstemperatur, bei welcher sie beide fluid sind, um so das erste Material in einzelne Kügelchen eines Durchmessers in dem Bereich von 1 bis 50 µm aufzubrechen und das erste Material in dem zweiten Material zu verteilen,
(c) Bilden eines Films aus der Mischung, die aus Schritt (b) resultiert, und
(d) Bewirken oder Ermöglichen, daß sich der Film oder wenigstens das zweite Material verfestigt.

2. Verfahren nach Anspruch 1, **dadurch gekennzeichnet, daß** wenigstens das zweite Material durch chemische Wirkung härtet oder härten kann.

3. Verfahren nach Anspruch 1, **dadurch gekennzeichnet, daß** wenigstens das zweite Material ein Thermoplast ist, welcher bei Umgebungstemperatur fest ist.

4. Verfahren nach Anspruch 2, **dadurch gekennzeichnet, daß** wenigstens das zweite Material ein wärmehärtbares oder polymerisierbares Material ist, und daß der Filmbildungsschritt ein Gießen oder Extrudieren der Mischung, während sie fluid oder noch fluid ist, in oder auf einem Träger und ein Ermöglichen oder Bewirken, daß sie sich setzt, umfasst.

5. Verfahren nach Anspruch 1, **dadurch gekennzeichnet, daß** das Verhältnis der Viskosität des zweiten Materials zu der Viskosität des ersten Materials bei der Verarbeitungstemperatur in dem Bereich von 0,05 bis 10 liegt.

6. Verfahren nach einem der vorangehenden Ansprüche, einschließend ein Ausrichten des Films.

7. Verfahren nach Anspruch 6, bei welchem der Sichtwinkel des Materials vor dem Ausrichtungsverfahren wenigstens 60° ist.

8. Verfahren nach Anspruch 1, **dadurch gekennzeichnet, daß** der Filmbildungsschritt ein Extrudieren der Mischung durch eine Breitschlitzdüse umfasst.

9. Verfahren nach Anspruch 1, **dadurch gekennzeichnet, daß** der Film unter Verwendung einer Rohrdüse extrudiert wird.

10. Verfahren nach Anspruch 2 oder 3, weiter umfassend den Schritt eines Streckens des Films, wenn er die Düse verlässt, um den Film auszurichten.

11. Verfahren nach Anspruch 1, **dadurch gekennzeichnet, daß** die durchschnittliche Teilchengröße der lichtstreuenden Teilchen von 1 bis 50 µm ist.

12. Verfahren nach Anspruch 1, **dadurch gekennzeichnet, daß** die durchschnittliche Teilchengröße der lichtstreuenden Teilchen von etwa 2 bis 30 µm ist.

13. Verfahren nach Anspruch 1, **dadurch gekennzeichnet, daß** die durchschnittliche Teilchengröße der lichtstreuenden Teilchen von etwa 2 bis 15 µm ist.

14. Verfahren nach Anspruch 7, **dadurch gekennzeichnet, daß** der Bogen in der Maschinenrichtung durch Aufwickeln des Bogens auf eine Aufnahmerolle gestreckt wird, welche schneller betrieben wird als die Geschwindigkeit, bei welcher der Bogen die Düse verlässt.

15. Verfahren nach Anspruch 9, bei welchem das gebildete Rohr ausgerichtet wird durch eine Kombination aus Differenzdruck und Abziehgeschwindigkeit.

16. Verfahren nach Anspruch 1, **dadurch gekennzeichnet, daß** der Filmbildungsschritt ferner ein Ausrichten der verteilten Kügelchen des ersten Materials in der Maschinenrichtung durch Extrudieren der Mischung durch eine Düse umfasst.

17. Verfahren nach Anspruch 1, **dadurch gekennzeichnet, daß** der Aufbrechungs- und Verteilungsschritt erreicht wird unter Verwendung eines Doppelschneckenextruders bei der Herstellung von Vormischungspellets aus der Mischung, wobei die Vormischungspellets anschließend in Bogenform unter Verwendung eines Einschneckenextruders verarbeitet werden, um die Schmelze in die Bogenform zu schmelzen, zu befördern und zu extrudieren.

18. Verfahren nach Anspruch 1, bei welchem Verträglichmachungsmittel in die Mischung integriert werden.

19. Verfahren nach Anspruch 18, bei welchem die Verträglichmachungsmittel Polymere oder Copolymere sind.

20. Verfahren nach einem der Ansprüche 1 bis 14, bei welchem eines der Materialien ein Polyolefin und das andere der Materialien Polystyrol umfasst.

21. Verfahren nach Anspruch 6, bei welchem das Ausrichtungsverfahren eine Asymmetrie von wenigstens 2:1 erzeugt.

## Revendications

1. Procédé de production d'un film diffuseur de lumière comprenant les étapes consistant à :
(a) choisir un premier matériau possédant une transmission de la lumière d'au moins 80 % et un deuxième matériau possédant une transmission de la lumière d'au moins 80 %, ces matériaux étant tous deux fluides à une certaine température et possédant des indices de réfraction différents, lesdits matériaux étant non miscibles dans leurs états fluides,
(b) constituer un mélange par agitation mécanique desdits matériaux à une température de traitement à laquelle ils sont tous deux fluides de manière à pulvériser le premier matériau en globules discrets de diamètres dans la plage de 1 µm à 50 µm et à disperser le premier matériau dans ledit deuxième matériau,
(c) constituer un film à partir du mélange résultant de l'étape (b), et
(d) entraîner ou permettre la solidification du film, ou au moins dudit deuxième matériau.

2. Procédé selon la revendication 1, dans lequel on entraîne ou on permet le durcissement d'au moins ledit deuxième matériau par action chimique.

3. Procédé selon la revendication 1, dans lequel au moins ledit deuxième matériau est un matériau thermoplastique qui est solide à la température ambiante.

4. Procédé selon la revendication 2, dans lequel au moins ledit deuxième matériau est un matériau thermodurcissable ou polymérisable et dans lequel ladite étape de constitution du film comprend la coulée ou l'extrusion du mélange, alors qu'il est fluide ou encore fluide, dans ou sur un support et on permet ou on entraîne son durcissement.

5. Procédé selon la revendication 1, dans lequel le rapport de la viscosité du deuxième matériau à la viscosité du premier matériau à ladite température de traitement est dans la plage de 0,05 à 10.

6. Procédé selon l'une quelconque des revendications précédentes, comprenant l'orientation dudit film.

7. Procédé selon la revendication 6, dans lequel l'angle de champ du matériau avant le processus d'orientation est d'au moins 60°.

8. Procédé selon la revendication 1, dans lequel ladite étape de constitution du film comprend l'extrusion dudit mélange à travers une filière plate.

9. Procédé selon la revendication 1, dans lequel ledit film est extrudé au moyen d'une filière tubulaire.

10. Procédé selon les revendications 2 ou 3, comprenant en outre l'étape consistant à étirer ledit film quand il sort de ladite filière afin d'orienter le film.

11. Procédé selon la revendication 1, dans lequel la taille moyenne de particule desdites particules dispersant la lumière va de 1 à 50 µm.

12. Procédé selon la revendication 1, dans lequel la taille moyenne de particule desdites particules dispersant la lumière va d'environ 2 à 30 µm.

13. Procédé selon la revendication 1, dans lequel la taille moyenne de particule desdites particules dispersant la lumière va d'environ 2 à 15 µm.

14. Procédé selon la revendication 7, dans lequel ladite feuille est étirée dans le sens machine par enroulement de ladite feuille sur un rouleau de reprise fonctionnant plus vite que la vitesse à laquelle la feuille sort de ladite filière.

15. Procédé selon la revendication 9, dans lequel le tube formé est orienté par une combinaison de pression différentielle et de taux de traction.

16. Procédé selon la revendication 1, dans lequel ladite étape de constitution du film comprend en outre l'orientation desdits globules dispersés dudit premier matériau dans le sens machine par extrusion dudit mélange à travers une filière.

17. Procédé selon la revendication 1, dans lequel ladite étape de pulvérisation et de dispersion est exécutée au moyen d'une extrudeuse à double vis dans la production de pastilles de mélange-maître à partir dudit mélange, lesdites pastilles de mélange-maître étant ensuite traitées sous forme de feuilles au moyen d'une extrudeuse à vis unique afin de faire fondre, de transporter et d'extruder la masse en fusion en ladite forme de feuilles.

18. Procédé selon la revendication 1, dans lequel des agents de compatibilisation sont incorporés dans le mélange.

19. Procédé selon la revendication 18, dans lequel les agents de compatibilisation sont des polymères ou des copolymères.

20. Procédé selon l'une quelconque des revendications 1 à 14, dans lequel l'un desdits matériaux comprend une polyoléfine et l'autre desdits matériaux comprend du polystyrène.

21. Procédé selon la revendication 6, dans lequel le processus d'orientation génère une asymétrie d'au moins 2:1.
